## Europäisches Patentamt
## European Patent Office
## Office européen des brevets

(19)

(11) Veröffentlichungsnummer: **0 003 325**

**A1**

(12) **EUROPÄISCHE PATENTANMELDUNG**

(21) Anmeldenummer: **79100146.4**

(22) Anmeldetag: **18.01.79**

(51) Int. Cl.²: **C 08 G 18/62**

(30) Priorität: **24.01.78 DE 2802927**

(43) Veröffentlichungstag der Anmeldung:
**08.08.79** Patentblatt **79/16**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Dikow, Hermann, Dr.**
**Birkenallee 74**
**D-6832 Hockenheim(DE)**

(72) Erfinder: **Haaf, Franz, Dr.**
**Leistadter Strasse 9**
**D-6702 Bad Duerkheim 1(DE)**

(72) Erfinder: **Heinz, Gerhard, Dr.**
**Im Vogelsang 2**
**D-6719 Weisenheim(DE)**

(72) Erfinder: **Jarre, Wolfgang, Dr.**
**Limesstrasse 3**
**D-6700 Ludwigshafen(DE)**

(72) Erfinder: **Nissen, Dietmar, Dr.**
**Ziegelhauser Landstrasse 31**
**D-6900 Heidelberg(DE)**

(54) **Verfahren zur Herstellung von gegebenenfalls geschäumten Polyurethanmassen.**

(57) Gegenstand der Erfindung ist ein Verfahren zur Herstellung von gegebenenfalls geschäumten Polyurethanmassen aus organischen Polyisocyanaten, Polymer-Polyol-Dispersionen und gegebenenfalls Zusatz- und Hilfsstoffen, wobei wässerige Polymerdispersionen, hergestellt durch Copolymerisation von Styrol, Acrylnitril und einem, einen Zerewitinoff aktiven Rest gebunden enthaltenden Monomeren, mit einer Polymerteilchengröße von 1 000 bis 10 000 Å und einem Feststoffgehalt von bis zu 65 Gew.% mit mindestens einer Polyhydroxylverbindung gemischt werden und danach das Wasser ganz oder teilweise abgetrennt wird.

EP 0 003 325 A1

0003325

BASF Aktiengesellschaft                    O.Z.  0050/033015

Verfahren zur Herstellung von gegebenenfalls
geschäumten Polyurethanmassen

Die vorliegende Erfindung betrifft ein Verfahren zur Herstellung von gegebenenfalls geschäumten Polyurethanmassen aus organischen Polyisocyanaten und Polyhydroxylverbindungen in Gegenwart mindestens eines Copolymerisats auf Styrol-Acrylnitril-Basis, das zusätzlich mindestens ein Monomeres mit einem Zerewitinoff aktiven Rest einpolymerisiert enthält.

Es ist bekannt, Polyurethan-Kunststoffe mit verschiedenartigen physikalischen Eigenschaften dadurch herzustellen, daß man Verbindungen mit mehreren aktiven Wasserstoffatomen, insbesondere Polyhydroxyverbindungen, mit Polyisocyanaten, gegebenenfalls unter Mitverwendung von Polymeren als Verstärkungsmitteln, Kettenverlängerungsmitteln, Vernetzungsmitteln, Treibmitteln, Aktivatoren, Emulgatoren und anderen Zusatzstoffen umsetzt. Bei geeigneter Wahl der Komponenten lassen sich auf diese Weise sowohl elastische als auch starre Schaumstoffe, Lackierungen, Imprägnierungen, Beschichtungen oder Elastomere herstellen.

Da für viele Anwendungsgebiete die Polyhydroxylverbindungen nicht in Form von Lösungen eingesetzt werden können, spielt bei der Herstellung von Polyurethankunststoffen die

M/BL

0003325

Viskosität der verwendeten Polymer-Polyol-Gemische eine wesentliche Rolle. Das gilt besonders für die Herstellung von Polyurethanschaumstoffen, bei der sich die Polymer-Polyol-Mischung einwandfrei über Pumpen fördern und dosieren sowie in Mischkammern homogen und möglichst schnell mit der Isocyanatkomponente sowie den Zusatzmitteln, wie Aktivatoren, Emulgatoren, Wasser und/oder Treibmitteln vermischen lassen müssen. Aus diesem Grunde sind bei der Herstellung von Polyurethanschaumstoffen möglichst niedrige Viskositäten erwünscht.

Durch schlechte Vermischung der Reaktanten bei der Polyurethanherstellung infolge von hohen Viskositäten treten Inhomogenitäten bzw. Schaumstörungen mit allen Nachteilen für die Qualität der Produkte auf.

Es ist weiterhin bekannt, daß durch Zusatz von Polymerisaten, die mit Isocyanaten reaktive Gruppen enthalten, die Tragfähigkeit von flexiblen Polyurethanschäumen niederer Dichte erhöht werden kann (US-PS 3 523 093). Nachteilig an dem beschriebenen Verfahren ist zunächst, daß die als Füllstoffe geeigneten Polymeren in Gegenwart von monofunktionellen aktive Wasserstoffatome aufweisenden organischen Lösungsmitteln, nämlich Alkoholen und Mercaptanen polymerisiert werden müssen. Verfährt man analog den Angaben dieser Publikation und verwendet die dort beschriebenen spröden Polymerisat-Pulver als Füllstoffe, dann steigt bei höheren Konzentrationen des Polymerisats in der Polyhydroxyverbindung die Viskosität der Mischung derart stark an, daß die Mischung technisch schwer zu handhaben ist, da sie nicht mehr frei fließt.

Dieser US-PS ist außerdem zu entnehmen, daß die darin beschriebenen Polymerisate nicht mehr verwendet werden können, wenn ein gewisses Molekulargewicht überschritten

0003325

wird, da dann die Viskosität der Polymer-Polyol-Abmischung so hoch wird, daß eine Verwendung zur Polyurethanherstellung nicht mehr möglich ist.

Hochviskose Polymer-Polyol-Mischungen sind für die Verarbeitung z.B. auf Hochdruck-Schaummaschinen, nicht mehr brauchbar.

Außerdem wird in der US-PS 3 523 093 ausgeführt, daß das pulverförmige, reaktionsfähige Polymerisat in der Polyhydroxyverbindung redispergierbar sein muß. Diese Arbeitsweise erfordert einen erhöhten technischen Aufwand. Das Polymerisat muß nach der Polymerisation durch bekannte Verfahren zunächst isoliert werden und im Anschluß daran getrocknet werden. Anschließend erfolgt die gleichmäßige Verteilung des Füllstoffes in der Polyhydroxyverbindung. Es handelt sich also um einen dreistufigen Prozeß, der einen erheblichen Aufwand an technischen Einrichtungen und Zeitbedarf mit sich bringt. Die Redispergierbarkeit ist für die Marktanwendung von wesentlicher Bedeutung, da Polymer-Polyol-Mischungen über einen längeren Zeitraum ohne auch teilweises makroskopisches Absetzen des dispergierten Polymerisates lagerstabil sein müssen. Ist diese Forderung nicht erfüllt, dann treten beim Dosieren der Polymer-Polyol-Mischung Schwierigkeiten auf. Außerdem ist dann eine gleichmäßige Verteilung des Füllstoffes nicht gewährleistet, die für optimale Eigenschaften, z.B. eines Polyurethan-Schaums erforderlich ist. Um diese Forderung zu erfüllen, muß das Polymerisat in möglichst feiner Form isoliert werden. Auch hierzu ist ein erhöhter technischer Aufwand notwendig.

Nach Angaben der US-PS 3 869 413 werden flexible Polyurethanschaumstoffe aus Polyisocyanaten und einem Polyäther-

0003325

polyol hergestellt, welches ein Polymer in Latexform mit einer Teilchengröße von 1.000 bis 10.000 $\overset{\circ}{A}$ in einer Menge von 2 bis 50 Gewichtsprozent, bezogen auf die Polymer-Polyol-Abmischung enthält und wobei das Polymere erhalten wird durch Polymerisation von einem oder mehreren äthylenisch ungesättigten Monomeren, die frei sind von Gruppen, die mit Isocyanat- oder Hydroxylgruppen unter Urethanbildungsbedingungen reagieren können. Nachteilig an diesem Verfahren ist, daß die mechanischen Eigenschaften, insbesonders die Zugfestigkeit, der auf diese Art hergestellten Weichschaumstoffe unbefriedigend ist. Ferner sind die Feststoffgehalte der wässerigen Polymerdispersion, insbesondere bei Styrol-Acrylnitril-Copolymerisaten mit großen Acrylnitrilgehalt, äußerst gering, so daß hohe Verfahrenskosten mit der Entwässerung verbunden sind.

Die deutschen Offenlegungsschriften 24 57 727 und 24 57 740 beschreiben die Herstellung von gegebenenfalls geschäumten Polyurethanmassen aus Polyisocyanaten und Polyhydroxylverbindungen in Gegenwart mindestens eines zumindest teilweise vernetzten Polymerisates mit einer Teilchengröße von 500 bis 5.000 $\overset{\circ}{A}$, welches keine bzw. mit Isocyanaten reagierende Gruppen enthält. Unbefriedigend ist auch hier die hohe Viskosität der Polymer-Polyol-Dispersion, die zu Verarbeitungsschwierigkeiten führen kann.

Aufgabe der vorliegenden Erfindung ist es, Polymer-Polyol-Mischungen aufzuzeigen, die eine günstige Verarbeitbarkeit bei gleichzeitiger Verbesserung der Polyurethan-Eigenschaften erlauben.

Aufgabe der vorliegenden Erfindung ist es außerdem, das Einbringen von Polymerisatpartikeln in das Polyol zu vereinfachen, wobei bevorzugt wäßrige Dispersionen mit dem Polyol abgemischt werden und das Wasser ganz oder teil-

0003325

"weise aus der Mischung abgezogen wird.

Diese Aufgabe wurde gelöst durch ein Verfahren zur Herstellung von gegebenenfalls geschäumten Polyurethanmassen aus einem Gemisch aus

A) mindestens einem organischen Polyisocyanat,

B) mindestens einer Polyhydroxyverbindung mit einem Molekulargewicht von ungefährt 500 bis 7 000 und einer Hydroxyzahl von 20 bis 1 000 aus der Gruppe der Polyäther- und Polyesterpolyole,

C) mindestens einem Copolymerisat, das mindestens eine mit Isocyanaten reagierende Gruppe enthält und gegebenenfalls

D) Zusatz- und Hilfsstoffen, das dadurch gekennzeichnet ist, daß man die Polyhydroxylverbindung (B) mit einer wässerigen Polymerdispersion mit einem Feststoffgehalt von bis zu 65 Gewichtsprozent, bezogen auf das Gesamtgewicht, die durch Copolymerisation in wässerigem Medium von

a) 30 bis 70 Gewichtsteilen Styrol

b) 70 bis 30 Gewichtsteilen Acrylnitril und

c) 0,01 bis 5 Gewichtsteilen mindestens eines Monomeren, das einen Zerewitinoff aktiven Rest gebunden enthält, hergestellt wird und wobei das Copolymerisat (C) eine Teilchengröße von 1 000 bis 10 000 $\overset{o}{A}$ besitzt, mischt, das Wasser ganz oder teilweise abtrennt, um eine Dispersion von 4 bis 30 Gewichtsteilen des Copolymerisats (C) in 96 bis 70 Gewichtsteilen der Polyhydro-

.0003325

xylverbindung (B) zu erhalten; und die resultierende Polymer-Polyol-Dispersion aus (B) und (C) mit organischen Polyisocyanaten (A) in Gegenwart von gegebenenfalls Zusatz- und Hilfsstoffen (D) zu gegebenenfalls geschäumten Polyurethanmassen umsetzt.

Überraschenderweise wurde gefunden, daß bei Verwendung eines Copolymerisats auf Basis Styrol-Acrylnitril in bestimmten Mengenverhältnissen, welches zusätzlich mindestens ein Monomeres mit einer Zerewitinoff aktiven Gruppe einpolymerisiert enthält, niedrigviskose und damit leichter verarbeitbare Polymer-Polyol-Mischungen erhalten werden.

Ein anderer Vorteil des erfindungsgemäßen Verfahrens besteht darin, daß bei Verwendung der speziellen Copolymerisate wäßrige Dispersionen mit höheren Feststoffgehalten erhalten werden, die hervorragend mit Polyhydroxylverbindungen abgemischt und danach ganz oder teilweise entwässert werden können.

Es ist ferner überraschend, daß mit dem erfindungsgemäßen Verfahren auch deutliche Verbesserungen der mechanischen Eigenschaften der jeweiligen Polyurethanmassen zu erreichen sind.

Zu den für das erfindungsgemäße Verfahren verwendeten Aufbaukomponenten ist folgendes auszuführen:

(A) Als Polyisocyanate (A) kommen aliphatische und aromatische mehrwertige Isocyanate in Frage, z.B. Alkylendiisocyanate wie Tetra- und Hexamethylendiisocyanat, Arylendiisocyanate und ihre Alkylierungsprodukte, wie die Phenylendiisocyanate, Naphthylendiisocyanate, Diphenylmethandiisocyanate, Toluylendiisocyanate, Di- und

0003325

Triisopropylbenzoldiisocyanate und Triphenylmethantriisocyanate, p-Isocyanatophenyl-thiophosphorsäure-tri-
ester, Aralkyldiisocyanate wie 1-(Isocyanatophenyl)-
äthylisocyanat oder Xylylendiisocyanate sowie auch die
durch die verschiedensten Substituenten wie Alkoxy-,
Nitro- und/oder Chlorreste substituierten Polyisocyanate, ferner solche Polyisocyanate, die mit unterschüssigen Mengen von Polyhydroxylverbindungen wie Trimethylolpropan, Hexantriol, Glycerin, Oligopropylenglykol-
Mischungen oder Butandiol modifiziert sind. Geeignet
sind ferner z.B. mit Phenolen oder Bisulfit verkappte
Polyisocyanate, acetalmodifizierte Isocyanate sowie
amid-, acylharnstoff-, carbodiimid- und isocyanuratmodifizierte Polyisocyanate.

Vorzugsweise werden Toluylendiisocyanate, Diphenylmethan-diisocyanate, Mischungen aus Diphenylmethan-diisocyanaten und Polyphenyl-polymethylen-polyisocyanaten
(Roh-MDI), Gemische aus Toluylen-diisocyanaten und Roh-
MDI, mit Polyhydroxylverbindungen modifizierte Polyisocyanate und Isocyanuratringe enthaltende Polyisocyanate
verwendet.

Die Polyisocyanate (A) werden zweckmäßigerweise in einer Menge eingesetzt, die 70 bis 130 %, vorzugsweise 85
bis 115 %, der theoretisch zur Umsetzung aller im Reaktionsgemisch vorliegenden, gegenüber Isocyanatgruppen
aktiven Wasserstoffatome erforderlichen Menge entspricht.

(B) Als Polyhydroxyverbindungen (B) verwendet man bei dem
erfindungsgemäßen Verfahren beispielsweise die üblichen
linearen oder verzweigten Polyester, die beispielsweise
aus mehrwertigen, vorzugsweise zweiwertigen Carbonsäuren wie Adipinsäure, Sebacinsäure, Phthalsäure, haloge-

0003325

nierten Phthalsäuren, Maleinsäure, monomeren, dimeren oder trimeren Fettsäuren und mehrwertigen Alkoholen, wie z.B. Äthylenglykol, Polyäthylenglykolen, Propylenglykol, Polypropylenglykolen, Butandiol, Hexantriolen bzw. Glycerin, erhalten worden sind, sowie lineare und verzweigte Polyäther, z.B. solche auf Basis von Äthylenoxid, Propylenoxid und Butylenoxid, Polythioäther, Polyacetale, Addukte von Äthylenoxiden an Polyamine und alkoxylierte Phosphorsäuren.

Vorzugsweise werden Polyhydroxylverbindungen auf Basis linearer und verzweigter Polyäther aus Propylenoxid und Äthylenoxid verwendet. Die Herstellung derartiger Polyäther erfolgt in üblicher Weise, z.B. wie in DT-OS 2 220 723, S. 4, beschrieben. Die verwendeten Polyole können eine Hydroxylzahl aufweisen, die innerhalb eines breiten Bereiches variieren kann. Im allgemeinen liegen die Hydroxylzahlen der erfindungsgemäß verwendeten Polyole innerhalb des Bereiches von etwa 20 und darunter bis etwa 1.000 und darüber, vorzugsweise von etwa 20 bis etwa 600 und insbesondere von etwa 25 bis etwa 450. Die Hydroxylzahl ist definiert als die Anzahl von mg Kaliumhydroxid, die zur vollständigen Hydrolyse des aus 1 g Polyol hergestellten vollständig acetylierten Derivats erforderlich ist. Die Hydroxylzahl kann auch durch die folgende Gleichung definiert werden:

$$OH = \frac{56,1 \times 1000 \times f}{MG}$$

worin bedeutet:

0003325

OH  die Hydroxylzahl des Polyols

f  die Funktionalität, d.h. die durchschnittliche
Anzahl der Hydroxylgruppen pro Molekül Polyol, und

MG  das Molekulargewicht des Polyols.

Welches Polyol jeweils verwendet wird, hängt von der
Endverwendung des daraus herzustellenden Polyurethanproduktes ab. Das Molekulargewicht oder die Hydroxylzahl wird in geeigneter Weise so ausgewählt, daß flexible, halbflexible oder starre Schäume oder Elastomere erhalten werden, wenn die aus dem Polyol hergestellte Polymer/Polyol-Masse in einen Polyurethanschaum überführt wird. Die Polyole weisen vorzugsweise eine Hydroxylzahl von etwa 200 bis etwa 1 000 auf,
wenn sie für starre (harte) Schäume verwendet werden,
sie weisen eine Hydroxylzahl von etwa 50 bis etwa 150
auf für die Herstellung halbflexibler Schäume und von
etwa 20 bis 70 oder mehr bei der Verwendung für die
Herstellung flexibler Schäume. Durch diese Grenzen ist
die vorliegende Erfindung jedoch keineswegs beschränkt, sondern diese dienen lediglich der Erläuterung der großen Anzahl von möglichen Kombinationen der
obigen Polyolreaktanten.

Die Polyhydroxyverbindungen (C) werden im allgemeinen
in solchen Mengen eingesetzt, daß die Hydroxylgruppen
der Komponente (B) zu den Isocyanatogruppen der Komponente (A) in etwa äquivalenten Mengen vorliegen, wobei zur Erzielung spezieller Eigenschaften ein Über-
oder Unterschuß von bis zu etwa 30 % gegenüber den
äquivalenten Mengen zweckmäßig sein kann.

(C) Als erfindungsgemäß mitzuverwendendes Copolymerisat
(C) kommen Copolymerisate auf Styrol-Acrylnitril-Basis
in bestimmten Mengenverhältnissen in Betracht, die zusätzlich ein Monomeres einpolymerisiert enthalten, das

0003325

einen Zerewitinoff aktiven Rest, beispielsweise eine NH$_2$-, NH-, SH-, COOH-Gruppe und vorzugsweise einen OH- und CONH$_2$-Rest besitzt. Als derartige Monomere seien beispielhaft genannt: Acrylamid, Methacrylamid, Butandiol-1,4-monoacrylat und vorzugsweise Hydroxypropylacrylat.

Die Copolymerisate werden vorzugsweise durch Emulsionspolymerisation in wäßrigem Medium bei Temperaturen von 50 bis 95$^{\circ}$C, vorzugsweise von 60 bis 90$^{\circ}$C, aus

a)   30 bis 70 Gewichtsteilen, vorzugsweise 50 bis 70 Gewichtsteilen Styrol,

b)   70 bis 30 Gewichtsteilen, vorzugsweise 30 bis 50 Gewichtsteilen, Acrylnitril und

c)   0,01 bis 5 Gewichtsteilen, vorzugsweise 0,1 bis 5 Gewichtsteilen, mindestens eines Monomeren, das einen Zerewitinoff aktiven Rest gebunden enthält,

hergestellt.

Die Emulsionspolymerisation in wäßrigem Medium wird im allgemeinen in Gegenwart von Emulgatoren, wie z.B. Alkalisalzen, insbesondere Natriumsalzen von Alkyl- oder Alkylarylsulfonaten, Alkylsulfonaten, Fettalkoholsulfonaten oder Fettsäuren mit 10 bis 30 Kohlenstoffatomen durchgeführt; bevorzugt eignen sich als Emulgatoren Natriumsalze von Alkylsulfonaten oder Fettsäuren mit 12 bis 18 Kohlenstoffatomen. Die Emulgatoren werden im allgemeinen in Mengen von 0,3 bis 5, insbesondere 1,0 bis 2,0 Gewichtsprozent, bezogen auf die Monomeren, verwendet. Gegebenenfalls werden übliche Puffersalze, wie Natriumbicarbonat und Natriumpyrophosphat

0003325

mitverwendet.

Desgleichen können die üblichen Polymerisations-Initiatoren, wie z.B. Persulfate oder organische Peroxide, gegebenenfalls zusammen mit Reduktionsmitteln verwendet werden. Das Gewichtsverhältnis Wasser zu Monomere liegt vorzugsweise zwischen 2 : 1 und 0,7 : 1. Die Polymerisation wird vorzugsweise bis zum nahezu vollständigen Umsatz, d.h. zu mehr als 90 %, insbesondere mehr als 96 % Umsatz der Monomere, fortgesetzt.

Die Größe der Latexteilchen kann durch bekannte Methoden, wie Beimpfen, Emulgatorkonzentration, gestaffelte Emulgatorzugabe, Flottenverhältnis, Emulsionszulauf und Zugabe von Agglomeriermitteln variiert werden. Die Teilchengröße (Durchmesser) kann zwischen 1 000 und 10 000 $\overset{o}{A}$ betragen. Vorzugsweise wird jedoch ein Polymerisat mit einer mittleren Teilchengröße ($d_{50}$-Wert der Massenverteilung), die durch Auszählung von Elektronenmikroskopaufnahmen oder durch Ultrazentrifugenmessung ermittelt werden kann, zwischen 1 000 und 4 000 $\overset{o}{A}$ verwendet. Die Maßangabe "$d_{50}$-Wert" bedeutet, daß 50 % der Massenanteile der Polymerpartikel einen Durchmesser über dem $d_{50}$-Wert und entsprechend 50 % der Massenanteile der Polymerpartikel einen Durchmesser unter dem $d_{50}$-Wert aufweisen. Die Breite der Massenverteilung der dispergierten Polymerteilchen kann innerhalb weiter Grenzen variieren. Vorzugsweise werden jedoch solche Polymerdispersionen verwendet, bei denen mindestens 20 % des Massenanteils der Polymerteilchen Durchmesser zwischen 1 100 und 3 000 $\overset{o}{A}$ aufweisen.

Ein wesentlicher Vorteil der erfindungsgemäß verwendbaren wässerigen Polymerdispersion auf Basis der genannten Copolymerisate ist, daß sie mit relativ hohen Feststoffgehalten, nämlich von bis zu 65 Gewichtsprozent, bezogen auf das Gesamtgewicht der Polymerdispersion, hergestellt werden können. Vorzugsweise verwendet werden Polymerdispersionen mit Feststoffgehalten von 33 bis 65 Gew.%, insbesondere 40 bis 60 Gew.%, bezogen auf das Gesamtgewicht der Polymerdispersion, da auf diese Weise die Verfahrenskosten für die Abtrennung des Wassers erheblich verringert werden können.

Das erfindungsgemäß mitzuverwendende Copolymerisat (C) wird in Form der wässerigen Polymerdispersion in solchen Mengen mit der Polyhydroxylverbindung (B) gemischt, daß nach Abtrennung des Wassers, die ganz oder teilweise erfolgen kann, Dispersionen von 4 bis 30 Gewichtsteilen, vorzugsweise 10 bis 25 Gewichtsteilen des Copolymerisats (C) in 96 bis 70 Gewichtsteilen, vorzugsweise 75 bis 90 Gewichtsteilen, der Polyhydroxylverbindung (B) resultieren. Die erhaltenen Polymer-Polyol-Dispersionen besitzen je nach Verwendungsart Wassergehalte von 0,001 bis 5 Gewichtsprozent, vorzugsweise 0,04 bis 2 Gewichtsprozent, bezogen auf das Gesamtgewicht, wobei die Polymer-Polyol-Dispersion mit größerem Wassergehalt, vorzugsweise zur Herstellung von Polyurethanschaumstoffen, verwendet werden.

Das Einbringen des Copolymerisats (C) und dessen gleichmäßige Verteilung in der Polyhydroxyverbindung (B) erfolgt - wie bereits erwähnt - durch Vermischen der wäßrigen Polymerdispersion mit der Polyhydroxylverbindung in üblichen Apparaturen, die eine intensive Durchmischung erlauben, wie kontinuierlich oder diskontinuierlich arbeitenden Mischaggregaten, beispielsweise in Rührwerken oder JSG-Mischern. Anschlie-

0003325

ßend wird das Wasser unter Anwendung physikalischer Trennmethoden, beispielsweise bei erhöhter Temperatur und/oder vermindertem Druck ganz oder zumindest teilweise abgetrennt. Besonders bewährt und vorzugsweise verwendet zur Abtrennung des Wassers wird ein Verfahren gemäß deutscher Patentanmeldung P 27 40 672.0.

(D) Hilfs- und Zusatzstoffe, die für das erfindungsgemäße Verfahren in Frage kommen sind beispielsweise Kettenverlängerungsmittel, Katalysatoren, Treibmittel und andere Hilfsstoffe.

Gegebenenfalls ist es auch zweckmäßig, bei dem erfindungsgemäßen Verfahren zur Herstellung der Polyurethan-Massen neben den höhermolekularen Polyhydroxylverbindungen zusätzlich Kettenverlängerungsmittel zu verwenden. Die Kettenverlängerungsmittel besitzen Molekulargewichte kleiner als 2 000, vorzugsweise 30 bis 600 und weisen vorzugsweise zwei aktive Wasserstoffatome auf. In Betracht kommen beispielsweise aliphatische und/oder aromatische Diole mit 2 bis 14, vorzugsweise 4 bis 10 Kohlenstoffatomen, wie Äthylenglykol, Propandiol, Decandiol-1,10 und vorzugsweise Butandiol-1,4, Hexandiol-1,6 und Bis-(2-hydroxyäthyl)-hydrochinon, Diamine, wie Äthylendiamin und 4,4'-Diaminodiphenylmethan, 33'-, 3,5'- di- bzw. 3,3',5,5'-tetraalkylsubstituierte 4,4'-Diamino-diphenylmethane, Äthanolamine, wie Triäthanolamin und Polyhydroxylverbindungen, wie Glycerin, Trimethylolpropan und niedermolekulare hydroxylgruppenhaltige Polyalkylenoxide aus den vorgenannten Ausgangsstoffen.

Zur Beschleunigung der Umsetzung zwischen den höhermolekularen Polyhydroxylverbindungen, gegebenenfalls

0003325

Kettenverlängerungsmitteln und Wasser und den organischen Polyisocyanaten werden der Reaktionsmischung übliche Katalysatoren, beispielsweise tertiäre Amine, wie Dimethylbenzylamin, Dicyclohexylmethylamin, Dimethylcyclohexylamin, N-Methyl- bzw. N-Äthylmorpholin, Dimethylpiperazin, Pyridin, 1-Aza-bicyclo-(3,3,0)-octan, Dimethylaminoäthanol, 1,2-Dimethylimidazol und vorzugsweise Triäthylendiamin und Metallsalze, wie Eisen-II-chlorid, Zinkchlorid und vorzugsweise Zinn-II-salze und Dibutylzinndilaurat hinzugefügt. Zur Erzielung von verschäumungstechnisch günstigen Reaktionszeiten wird in Abhängigkeit von der Reaktivität des gewählten Katalysators bzw. des Katalysatorgemischs die einzusetzende Menge empirisch ermittelt.

Zu Treibmitteln, welche gegebenenfalls im erfindungsgemäßen Verfahren verwendet werden können, gehört Wasser, das mit Isocyanatgruppen unter Bildung von Kohlendioxid reagiert. Die Wassermengen, die zweckmäßigerweise verwendet werden können, betragen 0,1 bis 2 %, bezogen auf das Gewicht der Polyhydroxylverbindung.

Andere verwendbare Treibmittel, die vorzugsweise verwendet werden, sind niedrigsiedende Flüssigkeiten, die unter dem Einfluß der exothermen Polymerisationsreaktion verdampfen. Geeignet sind Flüssigkeiten, welche gegenüber dem organischen Polyisocyanat inert sind und Siedepunkte von nicht über 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

0003325

Die zweckmäßigste Menge an niedrigsiedender Flüssigkeit zur Herstellung von geschäumten Polyurethanmassen hängt ab von der Schaumdichte, die man erreichen will sowie gegebenenfalls von der Mitverwendung von Wasser. Im allgemeinen liefern Mengen von 5 bis 40 Gewichtsprozent, bezogen auf 100 Gewichtsteile organisches Polyisocyanat, zufriedenstellende Ergebnisse.

Der Reaktionsmischung können auch noch Hilfsstoffe einverleibt werden. Genannt seien beispielsweise oberflächenaktive Schaumstabilisatoren, Hydrolysenschutzmittel, Porenregler, fungistatisch und bakteriostatisch wirkende Substanzen, Farbstoffe, Pigmente, Füllstoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gewichtsprozent pro 100 Gewichtsteile Polyisocyanat angewandt werden.

Geeignete Flammschutzmittel sind beispielsweise Trikresylphosphat, Tris-2-chloräthylphosphat, Tris-chlorpropylphosphat und Tris-2,3-dibrompropylphosphat.

Außer den bereits genannten halogensubstituierten Phosphaten können auch anorganische Flammschutzmittel, wie Antimontrioxid, Arsenoxid, Ammoniumphosphat und Calciumsulfat zum Flammfestmachen der Polyurethanschaum-

0003325

stoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile an organischem Polyisocyanat zu verwenden.

Nähere Angaben über die oben genannten üblichen Hilfsstoffe (D) sind der Fachliteratur, beispielsweise dem Buch saunders, Frisch, "High Polymers, Polyurethanes", Band 1 und 2 (1967) zu entnehmen.

Bei der erfindungsgemäßen Verwendung der oben beschriebenen Polymer-Polyol-Dispersion (C)/(B) zur Polyurethan-Kunststoff-Herstellung erhält man Produkte, die sich durch besonders vorteilhafte Eigenschaften auszeichnen.

Der Zusatz derartiger Polymerisate ergibt eine Verbesserung von Zugfestigkeit nach DIN 53 571, Weiterreißfestigkeit und Druckverformungsrest (nach DIN 53 572) der gegebenenfalls verschäumten Polyurethanmassen.

Außer diesen für die Praxis sehr wesentlichen Eigenschaften kann unter Konstanthaltung des Raumgewichts (nach DIN 53 420) durch Zusatz derartiger Polymerisate die Eindruckhärte (nach DIN 53 577) bei zelligen flexiblen Polyurethanmassen und -schäumen wesentlich erhöht werden.

Diese Eigenschaftsverbesserung bringt wirtschaftliche und verarbeitstechnische Vorteile bei der Herstellung von Polsterschaumstoffen, z.B. für Autositze, Polstermöbel etc.

Zusätzlich ist eine Erhöhung des Stauchfaktors (Ver-

0003325

hältnis der Eindruckhärte bei 60 % Stauchung zu 20 % Stauchung) durch Zusatz der vorher beschriebenen Polymerisate erreichbar. Dadurch ergibt sich ein progressives Stauchverhalten, d.h., ein weiches Einfedern bei geringer Eindruckkraft, jedoch eine wesentlich erhöhte Tragfähigkeit bei stärkerer Stauchung. Diese progressive Eindruckcharakteristik ist nicht nur wichtig für Polsterschaumstoffe, sondern ebenso erwünscht bei halbharten Schäumen für Sicherheitsabdeckungen im Automobilbau, leichten flexiblen Integralschäumen für Kopfstützen, Armlehnen etc. sowie für Schuhsohlen und ähnlichen Anwendungen.

Desgleichen kann der Stauchfaktor bei üblichen Heißblockschäumen, der etwa 2 beträgt, deutlich durch den Zusatz von derartigen Polymerisaten erhöht werden, so daß auf diese Weise Heißblockschäume mit einer verbesserten Stauchcharakteristik zu erhalten sind. Die erfindungsgemäßen gegebenenfalls geschäumten Polyurethanmassen werden nach dem Präpolymer- und vorzugsweise nach dem one shot-Verfahren hergestellt. Hierzu werden die Polymer-Polyol-Dispersionen (C)/(B), gegebenenfalls Kettenverlängerungsmittel, Treibmittel, Katalysatoren, Hilfs- und Zusatzstoffe und organische Polyisocyanate in den obengenannten Mengenverhältnissen bei Temperaturen von 20 bis 120°C, vorzugsweise von 25 bis 60°C, umgesetzt. Bei Verwendung einer Mischkammer mit mehreren Zulaufdüsen können das Polyisocyanat, die Polymer-Polyol-Dispersion, gegebenenfalls Kettenverlängerungsmittel, Treibmittel, Katalysator, Hilfs- und Zusatzstoffe zugeführt und in der Mischkammer intensiv vermischt werden. Als besonders zweckmäßig hat es sich jedoch erwiesen, nach dem Zweikomponenten-Verfahren zu arbeiten und die Polymer-Polyol-Dispersion mit gegebenenfalls Kettenverlängerungsmittel, Treibmittel und Katalysator, den Hilfs- und Zusatzstoffen zu der Komponente A zu vereinigen und als Komponente B die organischen Polyisocyanate zu verwenden. Vorteilhaft ist hierbei, daß die Komponente A und B getrennt beschränkte Zeit gelagert werden können und vor der Herstellung der Polyurethanmassen nur intensiv gemischt werden müssen.

Die in den Beispielen angegebenen Teile und Prozente beziehen sich auf das Gewicht.

Beispiel 1

a) Herstellung der Copolymerisatdispersion

In einem mit Zulaufgefäßen und Rührer ausgerüsteten Reaktionsgefäß wird unter Stickstoff eine Mischung aus 783     g Wasser,

10,7    g eines Styrol-Acrylnitrilgemisches im Gewichtsverhältnis 65 : 35

1,3    g Kaliumperoxidisulfat und

0,33 g einer 40 %-igen Lösung von paraffinsaurem Natrium in

Wasser 30 Minuten bei 85°C polymerisiert. Danach fügt man zu der anpolymerisierten Mischung im Laufe von 4 Stunden bei 85°C 650 g eines Styrol-Acrylnitrilgemisches im Gewichtsverhältnis 65 : 35, 13 g Hydroxypropylacrylat, 169 g einer 2 gewichtsprozentigen wäßrigen Kaliumperoxidisulfatlösung sowie 30 Minuten später über einen Zeitraum von 3,5 Stunden 65 g einer 10 gewichtsprozentigen Lösung von paraffinsulfonsaurem Natrium in Wasser und 1,3 g Natriumpyrophosphat. Man erhält eine wässerige Polymerdispersion mit einem Feststoffgehalt von 40 Gewichtsprozent, bezogen auf das Gesamtgewicht, einer Lichtdurchlässigkeit (LD-Wert) von 20 % und einer
Teilchengröße $d_{SL}$ von 260 nm.

Zur Messung der Lichtdurchlässigkeit (LD-Wert wird die
wässerige Copolymerdispersion auf einen Feststoffgehalt
von 0,01 Gewichtsprozent, bezogen auf das Gesamtgewicht,
verdünnt. Gemessen wird mit weißem Licht. Der LD-Wert
für Wasser ist 100 %. Die Teilchengröße ($d_{SL}$) wird berechnet aus der Winkelabhängigkeit des Streulichtes.

b) Herstellung der Polymer-Polyol-Dispersion

50 Teile der gemäß a) hergestellten wässerigen Copolymerdispersion und 80 Teile eines handelsüblichen trifunktionellen Polyätherpolyols auf Propylenoxid-Äthylenoxid-Basis mit einem Molekulargewicht von 4.800 und
einer Hydroxylzahl von 35 werden gemischt und mit Hilfe
eines Dünnschichtverdampfers unter vermindertem Druck
auf einen Wassergehalt kleiner als ein Gewichtsprozent
entwässert.

Die erhaltene Polymer-Polyol-Dispersion besitzt eine
Viskosität bei 23°C nach Brookfield (50 Umdrehungen/
Minute) von 4640 m Pa . s.

Beispiele 2 - 4 und Vergleichsbeispiele A - B

Verfährt man analog den Angaben von Beispiel 1 a) und b),
variiert jedoch das Gewichtsverhältnis von Styrol zu Acrylnitril, so erhält man die in Tabelle 1 zusammengefaßten
Meßergebnisse.

0003325

Beispiel C

a) Herstellung der Copolymerisatdispersion

In einem mit Zulaufgefäßen und Rührer ausgerüsteten Reaktionsgefäß wird unter Stickstoff eine Mischung aus 1058    g Wasser,
4,33 g eines Styrol-Acrylnitrilgemisches im Gewichtsverhältnis 25 : 75
0,65 g Kaliumperoxidisulfat und
0,17 g einer 40 gewichtsprozentigen Lösung von paraffinsulfonsaurem Natrium in Wasser

30 Minuten bei 85°C polymerisiert. Danach fügt man zu der anpolymerisierten Mischung im Laufe von 4 Stunden bei 85°C 325 g eines Styrol-Acrylnitrilgemisches im Gewichtsverhältnis 25 : 75, 6,5 g Hydroxypropylacrylat, 162 g einer 1-gewichtsprozentigen wäßrigen Kaliumperoxidisulfatlösung sowie 30 Minuten später über einen Zeitraum von 3,5 Stunden 65 g einer 5-gewichtsprozentiger Lösung von paraffinsulfonsaurem Natrium in Wasser und 0,65 g Natriumpyrophosphat. Man erhält eine wässerige Polymerdispersion mit einem Feststoffgehalt von 20 Gewichtsprozent, bezogen auf das Gesamtgewicht.

b) Herstellung der Polymer-Polyol-Dispersion

Man verfährt analog den Angaben von Beispiel 1 b), mischt jedoch 100 Teile der gemäß a) des Beispiels C hergestellten wässerigen Copolymeridispersion mit 80 Teilen des Polyätherpolyols.

Die Meßergebnisse sind in Tabelle 1 angegeben.

0003325

Tabelle 1

Lichtdurchlässigkeit und Teilchengröße der wässerigen Copolymerdispersionen sowie Viskosität der daraus hergestellten Polymer-Polyol-Dispersion

| Beispiel Vergl. Beispiel | Gewichts- verhältnis Styrol/Acryl- | wäßrige Copolymer- Dispersion | | Polymer-Polyol- Dispersion Viskosität $[\text{m Pa} \cdot \text{s}]$ |
|---|---|---|---|---|
| | | LD $[\%]$ | $d_{SL}$ $[\text{nm}]$ | |
| Beisp. 1 | 65 : 35 | 20 | 260 | 4640 |
| " 2 | 55 : 45 | 22 | 280 | 4740 |
| " 3 | 45 : 55 | 23 | 290 | 4140 |
| " 4 | 35 : 65 | 26 | 280 | 4100 |
| Vergl.- Beisp. A | 75 : 25 | 16 | 290 | 11940 |
| " B | 25 : 75 | koaguliert | | |
| " C | 25 : 75 | 15 | 390 | 3300 |

0003325

Die Beispiele 1 - 4 und Vergleichsbeispiele A - C zeigen, daß wässerige Copolymerdispersionen mit einem Gehalt an polymerisierten Acrylnitrileinheiten im Copolymerisat größer als 70 % nur mit niedrigen Feststoffgehalten hergestellt werden können. Nachteilig sind hierbei die anfallenden hohen Herstellungs- und Entwässerungskosten. Die erhaltenen Ergebnisse zeigen ferner, daß wässerige Copolymerdispersionen mit einem Gehalt an polymerisierten Acrylnitrileinheiten im Copolymerisat kleiner als 30 % Polymer-Polyol-Dispersionen mit hohen Viskositäten ergeben, die auf üblichen Verarbeitungsmaschinen nicht oder nur sehr schwer zu verarbeiten sind.

## Beispiele 5 und 6 und Vergleichsbeispiele D und E

a) Herstellung der Copolymerisatdispersionen

In einem mit Zulaufgefäßen und Blattrührer ausgerüsteten Autoklaven werden unter Stickstoff ein Gemisch von 50 Teilen Wasser, 0,5 Teilen Na-Alkylsulfonat, z.B. Mersolat K 30 vorgelegt und die Mischung auf 80°C aufgeheizt. Nachdem diese Temperatur erreicht ist, werden 0,1 Teile Kaliumpersulfat und 1/5 eines voremulgierten Gemisches von 100 Teilen der Monomermischung, 100 Teilen entsalztes Wasser und 0,5 Teilen Mersolat K 30 zugesetzt. Nach dem Anspringen der Polymerisation werden die restlichen 4/5 des voremulgierten Gemisches über einen Zeitraum von 2 Stunden hinzugefügt und dann noch eine Stunde nachpolymerisiert. Die Zusammensetzung der Copolymerisate sowie die gemessene Lichtdurchlässigkeit LD und die Teilchengröße $d_{SL}$ sind in Tabelle 2 zusammengefaßt.

0003325

b) Herstellung der Polymer-Polyol-Dispersion

100 Teile eines handelsüblichen trifunktionellen Polyätherpolyols auf Propylenoxid-Äthylenoxid-Basis mit einem
mittleren Molekulargewicht von 4 800 und einer Hydroxylzahl von 35 werden in einem Rührbehälter mit 25 Teilen
der nach a) hergestellten Dispersion gemischt und anschließend das Wasser unter vermindertem Druck vollständig entfernt.

Die Viskositätsmessungen der Mischungen erfolgte im
Brookfield-Viskosimeter bei 23°C und 50 UpM. Die Ergebnisse sind in Tabelle 2 zusammengefaßt.

Tabelle 2

| Beispiel | 5 | | 6 | |
| Vergl.-Beispiel | | D | | E |
|---|---|---|---|---|
| Styrol [Teile] | 60 | 67 | 60 | 67 |
| Acrylnitril [Teile] | 35 | 28 | 35 | 28 |
| Umsetzungsprodukt L [Teile] | 5 | 5 | - | - |
| Hydroxypropylacrylat [Teile] | - | - | 5 | 5 |
| Wäßrige Dispersion: | | | | |
| LD [%] | 48 | 77 | 51 | 81 |
| $d_{SL}$ [nm] | 180 | 110 | 170 | 100 |
| Polymer-Polyol-Dispersion: | | | | |
| Viskosität [m Pa . s] | 2160 | 3260 | 2080 | 2850 |

0003325

"Umsetzungsprodukt L" ist ein Umsetzungsprodukt aus 1 Mol Maleinsäureanhydrid und 1 Mol eines Polyätherpolyols auf Basis Polypropylenglykol mit einem mittleren Molekulargewicht von 2000.

Die erhaltenen Ergebnisse zeigen, daß durch Verwendung von Copolymerisaten mit einem Gehalt an polymerisierten Acrylnitrileinheiten größer als 30 %, Polymer-Polyol-Dispersionen hergestellt werden können, die eine deutliche niedrigere Viskosität aufweisen.

## Vergleichsbeispiel F

Verfährt man analog den Angaben der US-PS 3 523 093, Beispiel 11, verwendet jedoch anstelle von Styrol und 2-Äthylhexylacrylat eine Monomermischung aus 45 Teilen Styrol, 55 Teilen Acrylnitril und 2 Teilen Hydroxypropylacrylat, so koaguliert die Reaktionsmischung.

Das Vergleichsbeispiel zeigt, daß die erfindungsgemäßen gegebenenfalls geschäumten Polyurethanmassen nicht analog US-PS 3 523 093 hergestellt werden können.

## Beispiel 7

a) Herstellung der Copolymerisat-Dispersion

In einem mit Zulaufgefäßen und Rührer ausgestatteten Reaktionsgefäß wird unter Stickstoff eine Mischung aus

663     g Wasser,
  6,5   g eines Styrol-Acrylnitrilgemisches im Gewichtsverhältnis 50 : 50
  1,3   g Kaliumperoxidisulfat und
  0,33  g einer 40-gewichtsprozentigen Lösung von paraffinsaurem Natrium in Wasser

-25-

0003325

60 Minuten bei 85°C polymerisiert. Danach fügt man zu der anpolymerisierten Mischung im Lauf von 4 Stunden bei 85°C 650 g eines Styrol-Acrylnitrilgemisches im Gewichtsverhältnis 50 : 50, 13 g Acrylamid (AM), 3,25 g Kaliumperoxidisulfat, gelöst in 70 g Wasser sowie 30 Minuten später über einen Zeitraum von 3,5 Stunden 16,25 g einer 40-gewichtsprozentigen Lösung von paraffihsulfonsaurem Natrium, vermischt mit 70 g Wasser, und 1,3 g Natriumpyrophosphat. Man erhält eine wässerige Polymerdispersion mit einem Feststoffgehalt von 45 Gewichtsprozent, bezogen auf das Gesamtgewicht.

b) Herstellung der Polymer-Polyol-Dispersion

Man verfährt analog den Angaben von Beispiel 1 b), mischt jedoch 44,4 Teile der gemäß a) des Beispiels 7 hergestellten wässerigen Copolymerdispersion mit 80 Teilen des Polyätherpolyols.

Die Meßergebnisse sind in Tabelle 3 angegeben.

Beispiel 8

a) Herstellung der Copolymerisat-Dispersion

Man verfährt analog den Angaben des Beispiels 7 a), gibt jedoch in die Vorlage für die Anpolymerisation statt 663 g Wasser 532 g Wasser. Man erhält eine wäßrige Polymerdispersion mit einem Feststoffgehalt von 50 Gewichtsprozent, bezogen auf das Gesamtgewicht.

b) Herstellung der Polymer-Polyol-Dispersion

Man verfährt analog den Angaben des Beispiels 7 b), mischt jedoch 40 Teile der gemäß a) des Beispiels 8 her-

0003325

gestellten wässerigen Copolymerdispersion mit 80 Teilen des Polyätherpolyols.

Die Meßergebnisse sind in Tabelle 3 angegeben.

Beispiele 9 und 10

Man verfährt analog den Angaben der Beispiele 7 und 8, ersetzt aber Acrylamid (AM) durch Methacrylamid (MAM).

Die Meßergebnisse sind in Tabelle 3 angegeben.

Vergleichsbeispiele G und H

Man verfährt bei dem Vergleichsbeispiel G analog den Angaben der Beispiele 7 und 9, bzw. bei dem Vergleichsbeispiel H analog den Beispielen 8 und 10, verzichtet aber nach der Anpolymerisation auf die Zugabe der ungesättigten Säureamide Acrylamid (AM) bzw. Methacrylamid (MAM).

Die Meßergebnisse sind in Tabelle 3 angegeben.

Tabelle 3

| Beispiel | Monomerenverhältnisse der Copolymerisate | | | | wäßrige Dispersion | | Polymer-Polyol-Dispersion |
| | Styrol | Acrylnitril | AM | MAM | Fest-stoff-gehalt [%] | LD [%] | Viskosität [m Pa . s] |
|---|---|---|---|---|---|---|---|
| 7 | 50 | 50 | 2 | - | 45 | 31 | 5000 |
| 8 | 50 | 50 | 2 | - | 50 | 34 | 6800 |
| 9 | 50 | 50 | - | 2 | 45 | 24 | 4880 |
| 10 | 50 | 50 | - | 2 | 50 | 26 | 5160 |
| Vergl.-Beisp. | | | | | | | |
| G | 50 | 50 | - | - | 45 | 26 | 5400 |
| H | 50 | 50 | - | - | 50 | koaguliert | |

0003325

Die erhaltenen Ergebnisse zeigen, daß durch Verwendung der erfindungsgemäßen Monomermischungen Copolymerisat--Dispersionen mit höheren Feststoffgehalten hergestellt werden können bzw. daß bei gleichen Feststoffgehalten die daraus hergestellten Polymer-Polyol-Dispersionen eine niedrigere Viskosität besitzen.

Herstellung der Polyurethanschaumstoffen

Beispiel 11

Eine Mischung aus

60      Teilen eines handelsüblichen trifunktionellen Poly-ätherpolyols auf Basis Propylenoxid-Äthylenoxid mit einem Molekulargewicht von 4800 und einer Hydroxyl-zahl von 35,

40      Teilen einer Polymer-Polyol-Dispersion hergestellt gemäß Beispiel 3,

2,8     Teilen Wasser,

1,2     Teilen eines Siloxan-polyätherblockcopolymer (Sur-factant L-5303 der Union Carbide Comp.),

0,03    Teilen Dibutylzinndilaurat,

0,08    Teilen Triäthylendiamin,

0,08    Teilen 2,2'-Dimethylamino-diäthyläther und

0,5     Teilen N-Äthylmorpholin

werden mit

36,20   Teilen einer Mischung aus Toluylen-diisocyanat und eines Gemisches aus Di- und Polyphenyl-polymethylen--polyisocyanaten (Roh-MDI) im Gewichtsverhältnis 4 : 1

unter intensivem Rühren (1 800 Umdrehungen/Min.) bei 25°C

0003325

gemischt. Die schaumfähige Mischung wird in eine verschließbare 40°C warme Aluminiumform in einer solchen Menge eingebracht, daß ein Polyurethanschaumstoff mit einem Raumgewicht von 50 g/Liter erhalten wird.

Vergleichsversuch I

Man verfährt analog den Angaben von Beispiel 11, verwendet jedoch anstelle der Polymer-Polyol-Dispersionen hergestellt gemäß Beispiel 3 eine analog gewonnene Polymer-Polyol-Dispersion, die als disperse Phase ein Copolymer aus 45 % Styrol und 55 % Acrylnitril analog Polymer F der DT-OS 2 508 582 enthält.

Die Lichtdurchlässigkeit LD und Teilchengrößen $d_{SL}$ der wässerigen Copolymerdispersionen, die Viskositäten der Polymer-Polyol-Dispersionen und die mechanischen Eigenschaften der hergestellten Polyurethanweichschaumstoffe sind in Tabelle 4 zusammengefaßt.

Tabelle 4

|  | Beispiel 11 | Vergleichs-Beispiel I |
|---|---|---|
| Wäßrige Dispersion | | |
| LD [%] | 23 | 18 |
| $d_{SL}$ [nm] | 290 | 280 |
| Polymer-Polyol-Dispersion | | |
| Viskosität [m Pa . s] bei 23°C | 4140 | 4200 |
| Polyurethanschaumstoff[+] | | |
| Raumgewicht nach DIN 53 420 [g/L] | 52,1 | 51,4 |
| Dehnung nach DIN 53 455 [%] | 135 | 122 |
| Zugfestigkeit nach DIN 53 455 [N/m²] | 0,164 | 0,149 |
| Härtezahl nach DIN 53 576 mit Stempel C | | |
| bei 25 % und | 29 | 29 |
| 65 % Stauchung | 74 | 76 |

[+]Mittelwerte aus 5 Schaumkissen der Größe 40 x 40 x 10 cm³

0003325

Die erhaltenen Ergebnisse zeigen, daß bei vergleichbaren Teilchengrößen und Viskositäten der Polymer-Polyol-Dispersionen sowie Dichten und Härtezahlen der Schaumstoffe die Dehnung und Zugfestigkeit der Polyurethanschaumstoffe mit Hilfe des erfindungsgemäßen Verfahrens verbessert werden kann.

Beispiel 12

a) Herstellung der Copolymerisat-Dispersion

In einem mit Zulaufgefäßen und Rührer ausgestatteten Reaktionsgefäß wird unter Stickstoff eine Mischung aus

412    g Wasser,
   6,5 g Styrol,
   1,3 g Kaliumperoxidisulfat und
   0,33g einer 40-gewichtsprozentigen Lösung von paraffinsulfonsaurem Natrium in Wasser

30 Minuten bei 85°C polymerisiert. Danach fügt man zu der anpolymerisierten Mischung im Laufe von 6 Stunden bei 85°C 650 g eines Styrol-Acrylnitrilgemisches im Gewichtsverhältnis 60 : 40, 13 g Acrylamid, 3,25 g Kaliumperoxidisulfat, gelöst in 159 g Wasser sowie 30 Minuten später über einen Zeitraum von 5,5 Stunden 16,25 g einer 40-gewichtsprozentigen Lösung von paraffinsulfonsaurem Natrium, vermischt mit 87 g Wasser, und 1,3 g Natriumpyrophosphat. Man erhält eine wässerige Polymerdispersion mit einem Feststoffgehalt von 50 Gewichtsprozent, bezogen auf das Gesamtgewicht, einer Lichtdurchlässigkeit (LD-Wert) von 13 % und einer Teilchengröße $d_{SL}$ von 270 µm.

0003325

b) Herstellung der Polymer-Polyol-Dispersion

Man verfährt analog den Angaben des Beispiels 8 b). Die erhaltene Polymer-Polyol-Dispersion besitzt eine Viskosität bei 23°C nach Brookfield (50 Umdrehungen/Minute) von 5600 m Pa . s.

c) Herstellung des Polyurethanschaumstoffes

Man verfährt analog den Angaben von Beispiel 11, verwendet jedoch anstelle der Polymer-Polyol-Dispersion hergestellt gemäß Beispiel 3 die gemäß b) des Beispieles 12 gewonnene Polymer-Polyol-Dispersion.

Die mechanischen Eigenschaften des Polyurethanschaumstoffes sind in Tabelle 5 zusammengefaßt.

Beispiel 13

a) Herstellung der Copolymerisat-Dispersion

In einem mit Zulaufgefäßen und Rührer ausgestatteten Reaktionsgefäß wird unter Stickstoff eine Mischung aus
328     kg Wasser
  2,6   kg eines Styrol-Acrylnitrilgemisches im Gewichtsverhältnis 50 : 50
  0,132 kg einer 40-gewichtsprozentigen Lösung von paraffinsulfonsaurem Natrium in Wasser und
  0,52  kg Kaliumperoxidisulfat

60 Minuten bei 85°C polymerisiert. Danach fügt man zu der anpolymerisierten Mischung im Laufe von 6 Stunden bei 85°C 260 kg eines Styrol-Acrylnitrilgemisches im Gewichtsverhältnis 50 : 50, 1,3 kg Kaliumperoxidisulfat in 34,8 kg Wasser sowie 30 Minuten später über einen Zeit-

0003325

raum von 5,5 Stunden 6,5 kg einer 40-gewichtsprozentigen Lösung von paraffinsulfonsaurem Natrium, vermischt mit 34,8 kg Wasser und 0,52 kg Natriumpyrophosphat. Nach weiteren 4,5 Stunden gibt man noch über einen Zeitraum von einer Stunde 5,2 kg Hydroxylpropylacrylat zu der anpolymerisierten Mischung. Man erhält eine wässerige Polymerdispersion mit einem Feststoffgehalt von 40 Gewichtsprozent, bezogen auf das Gesamtgewicht, einer Lichtdurchlässigkeit (LD-Wert) von 23 % und einer Teilchengröße $d_{SL}$ von 270 um.

b) Herstellung der Polymer-Polyol-Dispersion

50 Teile der gemäß a) hergestellten wässerigen Copolymerdispersion und 80 Teile eines handelsüblichen bifunktionellen Polyätherpolyols auf Propylen-Äthylenoxid-Basis mit einem Molekulargewicht von 4 000 und einer Hydroxylzahl von 29 werden gemischt und mit Hilfe eines Dünnschichtverdampfers unter vermindertem Druck auf einen Wassergehalt kleiner als 1 Gewichtsprozent entwässert.

Die erhaltene Polymer-Polyol-Dispersion besitzt eine Viskosität bei 23°C nach Brookfield (50 Umdrehungen/Minute) von 3 800 m Pa . s.

c) Herstellung des Polyurethanschaumstoffes

Eine Mischung aus

70 Teilen eines handelsüblichen bifunktionellen Polyätherpolyols auf Basis Propylenoxid-Äthylenoxid mit einem Molekulargewicht von 4 000 und einer Hydroxylzahl von 29,

30 Teilen einer Polymer-Polyol-Dispersion hergestellt gemäß b) des Beispiels 13,

0003325

2,7 Teilen Wasser,

0,4 Teilen einer 33-gewichtsprozentigen Lösung von Triäthylendiamin in Dipropylenglykol,

0,2 Teilen 2,2'-Dimethylamino-diäthyläther und

0,5 Teilen Siloxan-polyätherblockcopolymer (®Tegostab B 3471 der Firma Goldschmitt)

werden mit

33,5 Teilen einer Mischung im Gewichtsverhältnis 50 : 50 aus Toluylen-diisocyanat mit 80 % 2,4- und 20 % 2,6-Isomerenanteil und einem isocyanurat- und urethanmodifizierten Toluylen-diisocyanat mit einem NCO-Gehalt von 40 Gewichtsprozent und einer Viskosität von 45 m·Pa . s

unter intensivem Rühren (1 800 Umdrehungen/Min.) bei 25°C gemischt. Die schaumfähige Mischung wird in eine verschließbare 40°C warme Aluminiumform in einer solchen Menge eingebracht, daß ein Polyurethanschaumstoff mit einem Raumgewicht von 43 g/Liter erhalten wird.

Die mechanischen Eigenschaften des Polyurethanschaumstoffes sind in Tabelle 5 zusammengefaßt.

0003325

Tabelle 5

|  | Beispiel | |
|---|---|---|
|  | 12 | 13 |
| Polyurethanschaumstoff [+] | | |
| Raumgewicht nach DIN 53 420 $[g/l]$ | 51,1 | 43,2 |
| Dehnung      nach DIN 53 455  $[\%]$ | 0,158 | 0,109 |
| Zugfestigkeit nach DIN 53 455 $[N/m^2]$ | 123 | 168 |
| Stauchhärte nach DIN 53 577    $[N/mm^2]$ | | |
| bei 20 % | 47 | 16 |
|      40 % und | 63 | 24 |
|      60 % Stauchung | 105 | 43 |

[+] Mittelwerte aus 5 Schaumkissen der Größe
40 x 40 x 10 cm$^3$

0003325

<u>Patentansprüche</u>

1. Verfahren zur Herstellung von gegebenenfalls geschäumten Polyurethanmassen aus einem Gemisch aus

A) mindestens einem organischen Polyisocyanat,

B) mindestens einer Polyhydroxylverbindung mit einem Molekulargewicht von ungefähr 500 bis 7 000 und einer Hydroxylzahl von 20 bis 1 000 aus der Gruppe der Polyäther- und Polyesterpolyole,

C) mindestens einem Copolymerisat, das mindestens eine mit Isocyanaten reagierende Gruppe enthält und gegebenenfalls

D) Zusatz- und Hilfsstoffen

<u>dadurch gekennzeichnet</u>, daß man die Polyhydroxylverbindung (B) mit einer wässerigen Polymerdispersion mit einem Feststoffgehalt von bis zu 65 Gewichtsprozent, bezogen auf das Gesamtgewicht, die durch Copolymerisation in wässerigem Medium von

a) 30 bis 70 Gewichtsteilen Styrol

b) 70 bis 30 Gewichtsteilen Acrylnitril und

c) 0,01 bis 5 Gewichtsteilen mindestens eines Monomeren, das einen Zerewitinoff aktiven Rest gebunden enthält, hergestellt wird und wobei das Copolymerisat (C) eine Teilchengröße von 1 000 bis 10 000 Å besitzt, mischt, das Wasser ganz oder teilweise abtrennt, um eine Dispersion von 4 bis 30 Gewichtsteilen des Copolymerisats (C) in 96 bis 70 Gewichtsteilen der Polyhydroxylverbindung (B) zu erhalten, und die resultierende Polymer-Polyol-Dispersion aus (B) und (C) mit organischen Polyisocyanaten (A) in Gegenwart von gegebenenfalls Zusatz- und Hilfsstoffen (D) zu gegebenenfalls geschäumten Polyurethanmassen umsetzt.

0003325

2. Verfahren gemäß Anspruch 1, dadurch gekennzeichnet, daß das molare Verhältnis von NCO-Gruppen der Polyisocyanate zu Hydroxylgruppen und Zerewitinoff aktiven Resten der resultierenden Mischung aus (B) und (C) ungefähr 0,7 : 1 bis 1,3 : 1 ist.

3. Verfahren gemäß Anspruch 1, dadurch gekennzeichnet, daß das einen Zerewitinoff aktiven Rest gebunden enthaltende Monomere (c) ausgewählt ist aus der Gruppe Hydroxypropylacrylat, Acrylamid, Methacrylamid und Butandiol-1,4-mo-noacrylat.

4. Verfahren gemäß Anspruch 1, dadurch gekennzeichnet, daß das Copolymerisat (C) erhalten wird durch Copolymerisation in wässerigem Medium von

50    bis 70 Gewichtsteilen Styrol
30    bis 50 Gewichtsteilen Acrylnitril und
0,1 bis   5 Gewichtsteilen Hydroxypropylacrylat.

0003325

))) Europäisches
    Patentamt

EUROPÄISCHER RECHERCHENBERICHT

Nummer der Anmeldung

EP 79 100 146.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 508 582 (DOW CHEMICAL) <br> * Anspruch 1; Seite 2, Zeilen 22-31; <br> Seite 3, Zeilen 1-7, 28-31; <br> Seite 6, Zeilen 3-4, 7-13 * | 1,2 |
| | -- | |
| | DE - A - 2 519 099 (BASF WYANDOTTE) <br> * Seite 17, Zeilen 4 - 17 * | 1 - 4 |
| | -- | |
| A | US - A - 3 523 093 (P. STAMBERGER) <br> * Ansprüche 1,8 * | 1 - 3 |
| | -- | |
| D,A | DE - A - 2 457 727 (BASF) <br> * Seite 2, Zeilen 4-7 * | |
| | -- | |
| A | B. VOLLMERT "Polymer Chemistry" <br> 1973, Springer-Verlag, New York, <br> Heidelberg, Berlin, <br> * Seite 153, Zeilen 5-9 * | |
| | ---- | |

**KLASSIFIKATION DER ANMELDUNG (Int.Cl.²)**

C 08 G    18/62

**RECHERCHIERTE SACHGEBIETE (Int. Cl.²)**

C 08 G    18/14
C 08 G    18/62
C 08 G    18/63
C 08 L    75/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

X | Der vorliegende Recherchenbericht wurde für alle Patentansprüche erstellt.

| Recherchenort | Abschlußdatum der Recherche | Prüfer |
|---|---|---|
| Berlin | 23-04-1979 | KRAIL |

EPA form 1503.1   06.78